# EUROPÄISCHE PATENTSCHRIFT

(11) **EP 2 696 434 B1**
(45) Veröffentlichungstag und Bekanntmachung des Hinweises auf die Patenterteilung: **19.10.2016**
(21) Anmeldenummer: 12179713.8
(22) Anmeldetag: 08.08.2012
(51) Int. Cl.: H01M 10/613, B60L 11/18, H01M 10/617, H01M 10/625, H01M 10/6556

(54) **Kühlvorrichtung für eine Fahrzeugbatterie**
Cooling device for a car battery
Dispositif de refroidissement pour une batterie de véhicule

(43) Veröffentlichungstag der Anmeldung: 12.02.2014
(73) Patentinhaber: Samsung SDI Co., Ltd., Yongin-si, Gyeonggi-do (KR)
(72) Erfinder: Waha, Bernhard, 8075 Hart bei Graz (AT)
(74) Vertreter: Gulde & Partner

(56) Entgegenhaltungen:
- DE-A1-102008 014 155
- DE-A1-102008 027 293
- DE-A1-102010 032 899
- JP-A- 2011 134 659
- US-A1- 2009 325 052
- US-A1- 2012 045 683

## Beschreibung

### Gebiet der Erfindung

Die vorliegende Erfindung betrifft eine Kühlvorrichtung für eine Fahrzeugbatterie mit Batteriezellen, umfassend die in Anspruch 1 genannten Merkmale.
Insbesondere Hochvolt-Batterien für Elektro- und Hybridfahrzeuge sind hohen Belastungen durch das Entladen und Beladen (z.B. bei Rekuperation) höherer Energiemengen in kurzen Zeitabschnitten ausgesetzt. Durch den Innenwiderstand der Batteriezellen erwärmen sich derartige Batterien, was zu einer Verringerung der Lebensdauer der Batterien führen kann. Deshalb werden derartige Batteriesystem in der Regel gekühlt, beispielsweise durch eine Flüssigkühlung bei der eine Kühlflüssigkeit in Kanälen eines Kühlkörpers fließt, um so den Kühlkörper zu kühlen, der wiederum in thermischem Kontakt mit den Batteriezellen steht, um deren Wärme abzuführen. Insbesondere zur Umlenkung des Kühlmittels und zur Zuführung und Abführung des Kühlmittels zur Kühlvorrichtung werden manchmal Endkappen an einem oder beiden Enden des Kühlkörpers eingesetzt, beispielsweise sogenannte Kühlmittelverteiler die meist auch einen Zufluss und einen Abfluss für das Kühlmittel aufweisen. Es ist auch bekannt, dass Kühlkörper mehrere Kanäle oder Fluten parallel und/oder in Serie aufweisen können, um einen guten Wärmeübergang zwischen dem Kühlmittel und dem Kühlkörper zu ermöglichen.

### Stand der Technik

Eine Kühlvorrichtung der gattungsgemäßen Art ist aus der DE 10 2008 027 293 A1 bekannt. Die Vorrichtung zur Kühlung einer Fahrzeugbatterie umfasst eine Mehrzahl von elektrischen Speicherelementen, und einen Kühlkörper mit Kanälen zur Durchströmung mit einem Fluid, wobei die elektrischen Speicherelemente mit dem Kühlkörper in thermischem Kontakt stehen und Wärme der Speicherelemente an das Fluid übertragbar ist, wobei der die Kanäle umfassende Kühlkörper als zumindest ein Strangpressprofil ausgebildet ist. An dem Kühlkörper kann endseitig ein Sammler angeordnet sein, wobei zumindest einige der Kanäle in den Sammler münden. Durch den Sammler kann ein Fluidstrom auf die Kanäle verteilt werden. Der Sammler kann in seiner Querrichtung Trennwände zur Abtrennung verschiedener Kammern oder Teilräume des Sammlers aufweisen, um eine einfache oder auch mehrfache Umlenkung des Fluidstroms in dem Kühlkörper zu ermöglichen. Der Kühlkörper kann abgestuft unterschiedlich tief in den Sammler eingreifen um dem Druckabfall des Fluids über die Länge des Sammlers Rechnung zu tragen und eine gleichmäßige Fluiddurchströmung des Kühlkörpers sicher zu stellen. Weitere Kühlvorrichtungen mit Kühlmittelverteilern sind aus der US 2012/045683 A1, DE 10 2010 032899 A1, der JP 2011 134659 A und der DE 10 2008 014155 A1 bekannt.

Nachteilig an den bekannten Kühlvorrichtungen ist, dass eine gleichmäßige Fluiddurchströmung entweder gar nicht erreicht wird oder nur mit hohen Fertigungskosten, durch einen komplizierten Aufbau des Kühlkörpers.

### Zusammenfassung der Erfindung

Es ist eine Aufgabe der Erfindung, Kühlvorrichtungen der genannten Art in dieser Hinsicht zu verbessern und insbesondere eine Kühlvorrichtung anzugeben, die eine gleichmäßige Fluiddurchströmung mit einfachen und kostengünstigen Mitteln ermöglicht.

Die Lösung der Aufgabe erfolgt durch eine Batteriekühlvorrichtung nach Anspruch 1.
Am Kühlkörper ist also zumindest ein Zulauf oder ein Ablauf oder sowohl der Zulauf als auch der Ablauf des Kühlmittels in die Kühlvorrichtung vorgesehen. Mit, beispielsweise, dem Zulauf strömungsverbunden sind zumindest zwei Kanäle des Kühlkörpers. Die Strömungsverbindung ist dabei als direkte Strömungsverbindung des jeweiligen Kanals in Richtung zum Zulauf -analog zum Ablauf- zu verstehen und nicht als weitläufige Verbindung, beispielsweise über einen geschlossenen Kühlmittelkreislauf.

Der Zulauf und der Ablauf weisen eine Strömungsöffnung auf, die in Richtung zum am weitesten entfernten der strömungsverbundenen Kanäle gerichtet ist, so dass das Kühlmittel in möglichst direkter Linie zum weitest entfernten der Kanäle gelangt, die über den betreffenden Zulauf oder Ablauf bedient werden. Dadurch wird der Neigung des Kühlmittels entgegengewirkt, bevorzugt in die dem Zulauf nächstliegenden Kanäle des Kühlkörpers zu strömen, und so eine gleichmäßige Kühlmittelströmung erreicht.

Erfindungsgemäß verbindet die erste Strömungsöffnung den Zulauf und/oder den Ablauf mit einem jeweiligen Verteilerraum des Kühlmittelverteilers, wobei die zumindest zwei Kanäle, die mit dem Zulauf und/oder dem Ablauf strömungsverbunden sind, in den jeweiligen Verteilerraum münden. Beispielsweise strömt durch die erste Strömungsöffnung des Zulaufes das Kühlmittel in einen Verteilerraum des Zulaufes und weiter von diesem Verteilerraum des Zulaufes in die Kanäle des Kühlkörpers, die in den Verteilerraum des Zulaufes münden. Analog kann am Ablauf ein Verteilerraum des Ablaufs ausgebildet sein, so dass sich Kühlmittel aus Kanälen die in den Verteilerraum des Abflusses münden in dem Verteilerraum des Ablaufs sammelt und vom Verteilerraum des Ablaufs in den Ablauf strömt.

Am Zulauf und am Ablauf des Kühlmittelverteilers ist eine zweite Strömungsöffnung ausgebildet, die kleiner als die erste Strömungsöffnung ausgebildet ist. Die zweite Strömungsöffnung verhindert, dass sich zwischen der ersten Strömungsöffnung und dem nächstliegenden Kanal ein Lufteinschluss bildet.

Weiterbildungen der Erfindung sind in den abhängigen Ansprüchen, der Beschreibung sowie den beigefügten Zeichnungen angegeben.

Bevorzugt weist die zweite Strömungsöffnung zumindest ungefähr in Richtung desjenigen Kanals des Kühlkörpers, der am nächsten zur ersten Strömungsöffnung in den Kühlmittelverteiler mündet, um die Bildung eines Lufteinschlusses optimal zu verhindern.

In einer bevorzugten Ausführungsform sind am Kühlmittelverteiler sowohl der Zulauf als auch der Ablauf ausgebildet und ist am zweiten Ende des Kühlkörpers ein Abdeckelement angeordnet, durch welches das Kühlmittel umgelenkt wird. Dadurch kann ein U-förmiger Durchfluss durch den Kühlkörper erzielt werden und Verbindungen zum Zufluss und zum Abfluss der Kühlvorrichtung können am selben Ende der Kühlvorrichtung angeschlossen werden. Wenn der Zufluss und der Abfluss am selben Ende des Kühlkörpers ausgebildet sind, kann bevorzugt der Zufluss in Einbaulage des Kühlkörpers unterhalb des Abflusses liegen.

Bevorzugt ist der Kühlkörper als Strangpressprofil, insbesondere aus Aluminium, ausgebildet. Der Kühlkörper kann dann über seine Länge weitgehend homogene Kanäle mit gleichen Querschnitten aufweisen.

Bevorzugt ist der Kühlmittelverteiler aus Kunststoff, insbesondere im Spritzgussverfahren, gebildet. Der Kühlmittelverteiler ist dann bevorzugt mit dem Kühlkörper verklebt.
In einer weiteren Ausführungsform ist der Kühlmittelverteiler aus Aluminium, insbesondere im Druckgussverfahren, gebildet. Der Kühlmittelverteiler ist dann bevorzugt mit dem Kühlkörper verlötet oder verschweißt.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer erfindungsgemäßen Kühlvorrichtung.
- Fig. 2: ist eine schematische Detaildarstellung des Kühlmittelverteilers der Fig. 1.

### Detaillierte Beschreibung der Erfindung

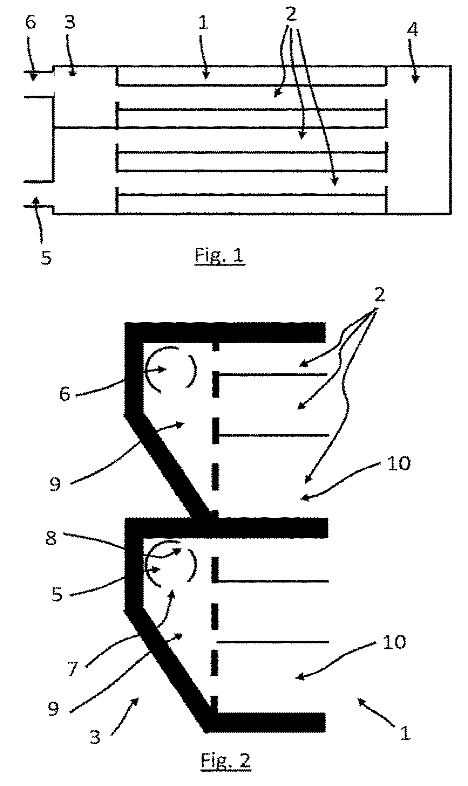

In der Fig. 1 ist schematisch eine Kühlvorrichtung für eine Fahrzeugbatterie dargestellt, umfassend einen Kühlkörper 1 mit drei Kanälen 2 zur Durchströmung mit einem Kühlmittel. (In einer realen Ausführungsform wird bevorzugt eine gerade Anzahl von Kanälen 2 verwendet, wenn der Zulauf 5 und der Ablauf 6 sich am selben Ende des Kühlkörpers 1 befinden.)

Am ersten Ende des Kühlkörpers 1 ist ein Kühlmittelverteiler 3 angeordnet, mit einem Zulauf 5 und einem Ablauf 6. Am zweiten Ende des Kühlkörpers 1 ist ein Abdeckelement 4 angeordnet, dass im Gegensatz zum Kühlmittelverteiler 3 über keinen Zulauf oder Ablauf verfügt und nur der Umlenkung des Kühlmittelstroms dient. Die Kanäle 2 des Kühlkörpers 1 münden in den Kühlmittelverteiler 3 und das Abdeckelement 4. Am Kühlmittelverteiler ist eine Trennwand eingerichtet, die einen Verteilerraum 9 im Bereich des Zulaufs 5 von einem weiteren Verteilerraum 9 im Bereich des Ablaufs 6 trennt.

Am Zulauf 5 sowie am Ablauf 6 sind erste Strömungsöffnungen 7 ausgebildet, die in Richtung eines jeweiligen Haupt-Kanals 10 weisen, wobei der Haupt-Kanal 10 von den Kanälen 2, die mit dem Zulauf 5 beziehungsweise dem Ablauf 6 strömungsverbunden sind, jeweils derjenige Kanal 2 ist, der am weitesten vom Zulauf 5 beziehungsweise dem Ablauf 6 entfernt ist. Weiters ist am Zulauf 5 und am Ablauf 6 jeweils eine zweite Strömungsöffnung 8 ausgebildet, um die Bildung eines Lufteinschlusses zu verhindern.

Aus dem Zulauf 5 zuströmendes Kühlmittel gelangt durch die erste Strömungsöffnung 7 in den Verteilerraum 9 im Bereich des Zulaufs 5 und wird insbesondere in die Richtung der Einmündung des am weitesten entfernten Haupt-Kanals 10 gelenkt, gelangt jedoch über den Verteilerraum 9 auch in die weiteren Kanäle 2, die mit dem Verteilerraum 9 strömungsverbunden sind. Durch die in den Figuren unten dargestellten Kanäle 2 gelangt das Kühlmittel zum Abdeckelement 4, wo es umgelenkt wird, sodass es über die oben dargestellten Kanäle 2 in den weiteren Verteilerraum 9 im Bereich des Ablaufs 6 gelangt. Dort verlässt das Kühlmittel den Verteilerraum 9 bevorzugt durch die erste Strömungsöffnung 7, die am Ablauf 6 ausgebildet ist und in geringerer Menge durch die zweite Strömungsöffnung 8 des Ablaufs 6.

Die Erfindung ermöglicht somit, durch die Verwendung zumindest einer entsprechend ausgerichteten Strömungsöffnung eine gleichmäßige Kühlmitteldurchströmung mit einfachen und kostengünstigen Mitteln.

### Bezugszeichenliste

- 1: Kühlkörper
- 2: Kanal
- 3: Kühlmittelverteiler
- 4: Abdeckelement
- 5: Zulauf
- 6: Ablauf
- 7: erste Strömungsöffnung
- 8: zweite Strömungsöffnung
- 9: Verteilerraum
- 10: Haupt-Kanal

## Patentansprüche

1. Batteriekühlvorrichtung für eine Fahrzeugbatterie mit Batteriezellen, umfassend einen Kühlkörper (1) mit Kanälen (2) zur Durchströmung mit einem Kühlmittel, wobei der Kühlkörper (1) zur thermischen Kontaktierung der Batteriezellen vorgesehen ist, wobei an zumindest einem Ende des Kühlkörpers (1) ein Kühlmittelverteiler (3) mit einem Zulauf (5) und einem Ablauf (6) von Kühlmittel vorgesehen ist, wobei zumindest einige der Kanäle (2) des Kühlkörpers (1) in den Kühlmittelverteiler (3) münden und wobei zumindest zwei Kanäle (2) mit dem Zulauf (5) beziehungsweise dem Ablauf (6) strömungsverbunden sind, wobei am Zulauf (5) und am Ablauf (6) des Kühlmittelverteilers (3) eine erste Strömungsöffnung (7) ausgebildet ist, die in Richtung eines Haupt-Kanals (10) weist, wobei der Haupt-Kanal (10) von den zumindest zwei Kanälen (2), die mit dem Zulauf (5) beziehungsweise dem Ablauf (6) strömungsverbunden sind, derjenige Kanal (2) ist, der am weitesten vom Zulauf (5) beziehungsweise Ablauf (6) entfernt ist, **dadurch ge - kennzeichnet,** dass am Zulauf (5) und am Ablauf (6) des Kühlmittelverteilers (3) eine zweite Strömungsöffnung (8) ausgebildet ist, die kleiner als die erste Strömungsöffnung (7) ausgebildet ist, wobei die erste Strömungsöffnung (7) den Zulauf (5) beziehungsweise den Ablauf (6) mit einem jeweiligen Verteilerraum (9) des Kühlmittelverteilers (3) verbindet, wobei die zumindest zwei Kanäle (2), die mit dem Zulauf (5) beziehungsweise dem Ablauf (6) strömungsverbunden sind, in den jeweiligen Verteilerraum (9) münden.

2. Batteriekühlvorrichtung nach Anspruch 1,
**dadurch gekennzeichnet, dass** die zweite Strömungsöffnung (8) in Richtung desjenigen Kanals (2) des Kühlkörpers (1) weist, der am nächsten zur ersten Strömungsöffnung (7) in den Kühlmittelverteiler (3) mündet.

3. Batteriekühlvorrichtung nach zumindest einem der vorhergehenden Ansprüche,
**dadurch gekennzeichnet, dass** am Kühlmittelverteiler (3) sowohl der Zulauf (5) als auch der Ablauf (6) ausgebildet sind und am zweiten Ende des Kühlkörpers (1) ein Abdeckelement (4) angeordnet ist, durch welches das Kühlmittel umgelenkt wird.

4. Batteriekühlvorrichtung nach zumindest einem der vorhergehenden Ansprüche,
**dadurch gekennzeichnet, dass** der Kühlkörper (1) als Strangpressprofil, insbesondere aus Aluminium, ausgebildet ist.

5. Batteriekühlvorrichtung nach zumindest einem der vorhergehenden Ansprüche,
**dadurch gekennzeichnet, dass** der Kühlmittelverteiler (3) aus Kunststoff, insbesondere im Spritzgussverfahren, gebildet ist.

6. Batteriekühlvorrichtung nach zumindest einem der Ansprüche 1 bis 4,
**dadurch gekennzeichnet, dass** der Kühlmittelverteiler (3) aus Aluminium, insbesondere im Druckgussverfahren, gebildet ist.

## Claims

1. Battery cooling device for a vehicle battery with battery cells, comprising a cooling body (1) with channels (2) through which a coolant flows, wherein the cooling body (1) is provided for thermally contacting the battery cells, wherein a coolant distributor (3) with an inflow (5) and an outflow (6) of coolant is provided on at least one end of the cooling body (1), wherein at least some of the channels (2) of the cooling body (1) open into the coolant distributor (3) and wherein at least two channels (2) are fluidically connected to the inflow (5) and the outflow (6), respectively, wherein a first flow opening (7) which points in a direction of a main channel (10) is formed at the inflow (5) and at the outflow (6) of the coolant distributor (3), wherein the main channel (10) of the at least two channels (2) which are fluidically connected to the inflow (5) and the outflow (6), respectively, is the channel (2) which is furthest away from the inflow (5) and outflow (6), respectively, **characterised in that** a second flow opening (8) which is formed smaller than the first flow opening (7) is formed at the inflow (5) and at the outflow (6) of the coolant distributor (3), wherein the first flow opening (7) connects the inflow (5) and the outflow (6), respectively, to a respective distribution chamber (9) of the coolant distributor (3), wherein the at least two channels (2) which are fluidically connected to the inflow (5) and the outflow (6), respectively, open into the respective distribution chamber (9).

2. Battery cooling device according to claim 1, **characterised in that** the second flow opening (8) points in a direction of the channel (2) of the cooling body (1) which opens into the coolant distributor (3) closest to the first flow opening (7).

3. Battery cooling device according to at least one of the preceding claims,
**characterised in that** both the inflow (5) and the outflow (6) are formed at the coolant distributor (3) and a cover element (4), by which the coolant is deflected, is arranged at the second end of the cooling body (1).

4. Battery cooling device according to at least one of the preceding claims,
**characterised in that** the cooling body (1) is formed as an extruded profile, in particular of aluminium.

5. Battery cooling device according to at least one of the preceding claims,
**characterised in that** the coolant distributor (3) is formed of plastic material, in particular by an injection moulding process.

6. Battery cooling device according to at least one of claims 1 to 4,
**characterised in that** the coolant distributor (3) is formed of aluminium, in particular by a pressure die casting process.

## Revendications

1. Dispositif de refroidissement pour une batterie de véhicule automobile à cellules de batterie, comprenant un corps de refroidissement (1) avec des canaux (2) où circule un fluide réfrigérant, le corps de refroidissement (1) étant prévu pour contacter thermiquement les cellules de batterie, un répartiteur de fluide réfrigérant (3) avec une arrivée (5) et une évacuation (6) de fluide réfrigérant étant prévu à au moins une extrémité du corps de refroidissement (1), au moins quelques-uns des canaux (2) du corps de refroidissement (1) débouchant dans le répartiteur de fluide réfrigérant (3) et au moins deux canaux (2) étant reliés fluidiquement à l'arrivée (5) ou à l'évacuation (6), une première ouverture d'écoulement (7) dirigée vers un canal principal (10) étant formée sur l'arrivée (5) et sur l'évacuation (6) du répartiteur de fluide réfrigérant (3), le canal principal (10) étant celui (2) des au moins deux canaux (2) reliés fluidiquement à l'arrivée (5) ou à l'évacuation (6) qui est le plus distant de l'arrivée (5) ou de l'évacuation (6), **caractérisé en ce qu'**une deuxième ouverture d'écoulement (8) est formée sur l'arrivée (5) et sur l'évacuation (6) du répartiteur de fluide réfrigérant (3), laquelle est plus petite que la première ouverture d'écoulement (7), la première ouverture d'écoulement (7) reliant l'arrivée (5) ou l'évacuation (6) à une chambre de répartition (9) respective du répartiteur de fluide réfrigérant (3), chacun des au moins deux canaux (2), reliés fluidiquement à l'arrivée (5) ou à l'évacuation (6) débouchant dans la chambre de répartition (9) correspondante.

2. Dispositif de refroidissement selon la revendication 1,
**caractérisé en ce que** la deuxième ouverture d'écoulement (8) est dirigée vers le canal (2) du corps de refroidissement (1) qui débouche dans le répartiteur de fluide réfrigérant (3) le plus près de la première ouverture d'écoulement (7).

3. Dispositif de refroidissement selon au moins une des revendications précédentes,
**caractérisé en ce que** l'arrivée (5) ainsi que l'évacuation (6) sont formées sur le répartiteur de fluide réfrigérant (3), et **en ce qu'**un élément de couverture (4) déviant le fluide réfrigérant est disposé à la deuxième extrémité du corps de refroidissement (1).

4. Dispositif de refroidissement selon au moins une des revendications précédentes,
**caractérisé en ce que** le corps de refroidissement (1) est réalisé comme profilé extrudé, en particulier en aluminium.

5. Dispositif de refroidissement selon au moins une des revendications précédentes,
**caractérisé en ce que** le répartiteur de fluide réfrigérant (3) est en matière plastique, en particulier moulée par injection.

6. Dispositif de refroidissement selon au moins une des revendications 1 à 4,
**caractérisé en ce que** le répartiteur de fluide réfrigérant (3) est en aluminium, en particulier coulé sous pression.
